# EUROPÄISCHE PATENTSCHRIFT

(11) **EP 0 556 695 B1**
(45) Veröffentlichungstag und Bekanntmachung des Hinweises auf die Patenterteilung: **14.04.1999**
(21) Anmeldenummer: 93101995.4
(22) Anmeldetag: 09.02.1993
(51) Int. Cl.: H01J 29/76, H04N 3/30

(54) **Ablenkschaltung für einen Fernsehempfänger mit symmetrischer Ablenkung**
Deflection circuit for television receiver with symmetric deflection
Circuit de déflexion pour récepteur de télévision à la déflexion symétrique

(30) Priorität: 20.02.1992 DE 4205146; 02.03.1992 DE 4206479; 07.03.1992 DE 4207350
(43) Veröffentlichungstag der Anmeldung: 25.08.1993
(60) Teilanmeldung: 98114728.3
(73) Patentinhaber: DEUTSCHE THOMSON-BRANDT GMBH, 78048 Villingen-Schwenningen (DE)
(72) Erfinder: Hirtz, Gangolf, W-7732 Niedereschach 2 (DE); Bader, Bernd, W-7162 Gschwend (DE); Francois, Yves, W-7730 Villingen (DE); Tenconi, Bernd, W-7734 Brigachtal 2 (DE); Ohnemus, Fritz, W-7730 VS-Villingen (DE)

(56) Entgegenhaltungen:
- EP-A- 0 456 942
- WO-A-88/07799
- DE-A- 3 916 055
- JP-A- 3 257 742
- PROCEEDINGS OF THE INTERNATIONAL CONFERENCE ON CONSUMER ELECTRONICS Bd. 4, 1985, ROSEMONT, USA KRAUS 'ENHANCED AND HIGH DEFINITION TV'

## Beschreibung

Die Erfindung betrifft eine Ablenkschaltung für einen Fernsehempfänger. Die Erfindung geht aus von einer Ablenkschaltung gemäß dem Oberbegriff des Anspruchs 1. Bei der symmetrischen Ablenkung wird der Elektronenstrahl zum Schreiben eines Bildes zunächst vom linken zum rechten Bildrand und anschließend ohne schnellen Rücklauf vom rechten zum linken Bildrand ebenfalls zum Schreiben eins Bildes abgelenkt. Der Zeilenablenkstrom hat dabei insbesondere einen sinusförmigen Verlauf, wobei die halbe Periodendauer dieses Sinus einer geschriebenen Zeile entspricht. Bei einer derartigen symmetrischen Ablenkung muß die Vertikalablenkung einen treppenförmigen Verlauf haben, da sonst die von links nach rechts und von rechts nach links geschriebenen Zeilen auseinanderlaufen würden. Das Vertikalablenkfeld muß sich somit jeweils während der Zeilenaustastzeit sprungartig um einen Betrag ändern, der dem Abstand von zwei Zeilen in Vertikalrichtung entspricht.

Ein vertikaler Ablenkstrom mit einem derartigen treppenförmigen Verlauf hat eine hohe Bandbreite. Zur Erzielung eines relativ niederfrequenten Vertikalablenkstroms haben übliche Vertikalablenkspulen eine relativ hohe Induktivität von etwa 20 mH und insbesondere Sattel/Toroidspulen eine relativ niedrige Parallelresonanz, die häufig in der Größenordnung der horizontalen Ablenkfrequenz liegt. Es ist daher schwierig, mit vertretbaren Mitteln in einer derartigen Ablenkspule einen treppenförmigen Ablenkstrom mit hohen Frequenzkomponenten zu erzeugen.

In der DE-A-39 16 055 ist eine Ablenkeinrichtung für einen Fernsehempfänger mit symmetrischer Ablenkung beschrieben. Die Ablenkeinrichtung umfaßt eine Vertikalablenkspule und eine Horizontalablenkspule, denen mittels einer Ablenkschaltung ein Vertikal- bzw. Horizontalablenkstrom zugeführt wird. Weiterhin ist eine von der Vertikalablenkspule getrennte Vertikal-Hilfsablenkspule vorgesehen, deren Induktivität wesentlich kleiner ist als die der Vertikalablenkspule. Der Vertikal-Hilfsablenkspule wird ein Hilfsablenkstrom zugeführt, um gemeinsam mit dem Feld der Vertikalablenkspulen ein insgesamt treppenförmiges Vertikalablenkfeld in der Bildröhre zu erzeugen. Bei der bekannten Ablenkeinrichtung hat es sich jedoch gezeigt, daß durch ein Übersprechen zwischen der Horizontalablenkspule und der Vertikalablenkspule das Vertikalablenkfeld gestört sein kann.

Hiervon ausgehend liegt der Erfindung die Aufgabe zugrunde, eine Ablenkschaltung für einen Fernsehempfänger zu schaffen, die ein verbessertes treppenförmiges Vertikalablenkfeld erzeugt.

Diese Aufgabe wird erfindungsgemäß dadurch gelöst, daß der Vertikal-Hilfsablenkspule ein zeilenfrequenter Korrekturstrom zugeführt ist, der die Störung des Vertikalablenkfeldes durch Einstreuung des Horizontalablenkfeldes aus der Horizontalablenkspule kompensiert. Auch für eine derartige Kompensation ist die Hilfsablenkspule geringer Induktivität wesentlich besser geeignet als die Vertikalablenkspule selbst.

Bei der symmetrischen Ablenkung muß der horizontale Ablenkstrom voll symmetrisch sein. Das bedeutet, daß der Elektronenstrahl bei seinem Verlauf vom linken zum rechten Bildrand und vom rechten zum linken Bildrand sich bei einem bestimmten Bildpunkt des Bildes an derselben Stelle befindet. Bei einer Störung dieser Symmetrie würden z.B. zwei im Originalbild unmittelbar übereinander liegende Punkte in Zeilenrichtung versetzt abgebildet, wodurch es zu Doppelstrukturen kommen kann. Diese Störung tritt besonders bei höher auflösenden Bildröhren auf, wenn Oberwellen des Ablenkstromes nicht ausreichend unterdrückt sind. Gemäß einer Weiterbildung der Erfindung ist daher zusätzlich zu der Vertikal-Hilfsablenkspule noch eine Horizontal-Hilfsablenkspule vorgesehen, die ebenfalls eine wesentlich geringere Induktivität als die Horizontablenkspule selbst aufweist. Dieser Horizontal-Hilfsablenkspule wird dann ein zeilenfrequenter Korrekturstrom zugeführt, der die geforderte Symmetrie im Verlauf des sinusförmigen Ablenkstromes herstellt.

Weitere vorteilhafte Ausgestaltungen der Erfindung sind Gegenstand von Unteransprüchen.

Die Erfindung wird im folgenden anhand der Zeichnung erläutert. Darin zeigen
- Fig. 1: ein Blockschaltbild eines Fernsehempfängers mit der erfindungsgemäßen Lösung,
- Fig. 2: Kurven zur Erläuterung der Wirkungsweise des Empfängers gemäß Fig. 1,
- Fig. 3: Kurven zur Erläuterung des Übersprechens zwischen den Ablenkspulen und
- Fig. 4: Kurven zur Erläuterung einer Schaltung zur Reduzierung eines derartigen Übersprechens.

In der Zeichnung bedeutet H jeweils die Horizontalablenkung und V die Vertikalablenkung.

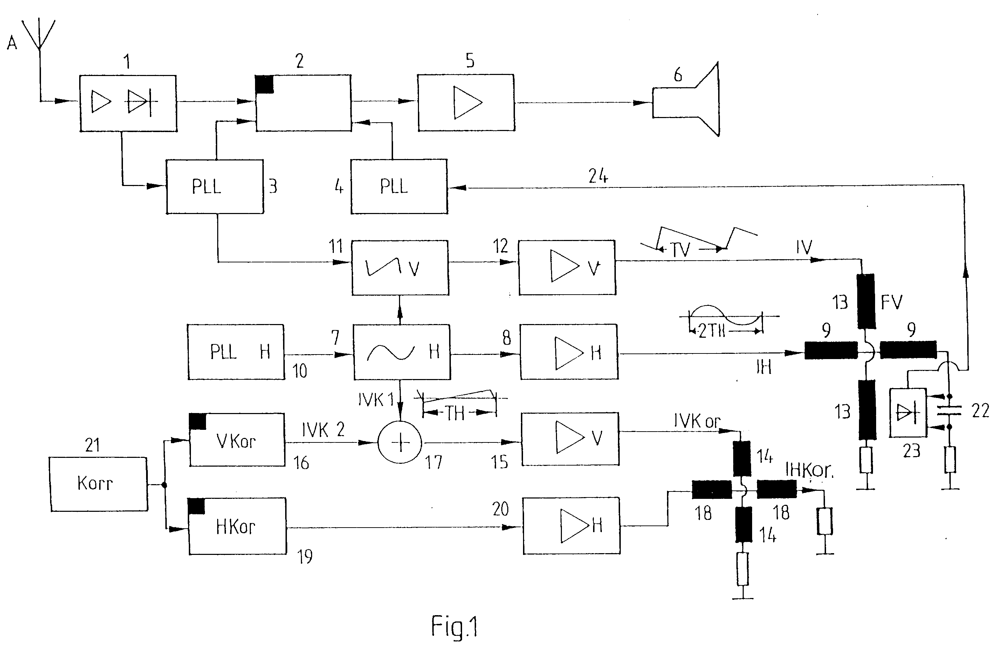

In Fig. 1 wird mit der Antenne A ein Fernsehsignal empfangen und der Eingangsschaltung 1 zugeführt. Diese enthält den Tuner, den ZF-Verstärker und die Decoder zur Gewinnung der Bildsignale. Die Bildsignale, z.B. das FBAS-Signal, Farbdifferenzsignale, Leuchtdichtesignal oder RGB-Signale gelangen auf den Videosignalspeicher 2, der von der durch das Eingangssignal synchronisierten PLL-Schaltung 3 getaktet wird. Die empfangenen Bildsignale werden dadurch zunächst in den Speicher 2 eingelesen. Für den Auslesevorgang ist die PLL-Schaltung 4 vorgesehen, durch die die Bildsignale so ausgelesen werden, daß sie an eine symmetrische Ablenkung angepaßt sind. Der Speicher 2 enthält z.B. FIFO und FILO-Speicher, mit denen die Signalfolge in jeder zweiten Zeile umgekehrt wird, damit diese Zeilen vom rechten zum linken Bildrand geschrieben werden können. Bei dem Auslesen der Signale werden außerdem die Dauer, die Phasenlage und die Kurvenform der Zeilenablenkung berücksichtigt, derart, daß die Bildpunkte des ursprünglichen Bildes auf dem Bildschirm wieder den gleichen räumlichen Abstand haben. Die derart aufbereiteten Signale gelangen über die Videoendstufe 5 auf die Bildröhre 6.

Der Horizontalablenkgenerator 7 erzeugt das horizontale Ablenksignal in Form eines symmetrischen Sinus, das über den Leistungsverstärker 8 den horizontalen Ablenkspulen 9, die in Resonanz betrieben werden, zugeführt wird. Die Zeilendauer TH entspricht dabei einer halben Periodendauer des sinusförmigen Ablenkstroms IH. Die den horizontalen Ablenkgenerator 7 steuernde PLL-Schaltung 10 bewirkt bei sinusförmiger Ansteuerung der Zeilenablenkspulen 9, daß das sinusförmige Ansteuersignal stets der Resonanzfrequenz des Ablenkkreises entspricht. Hierzu wird kontinuierlich die Phasenlage des Ablenkstroms IH zu der Ausgansspannung des Leistungsverstärkers 8 gemessen und entsprechend nachgeregelt.

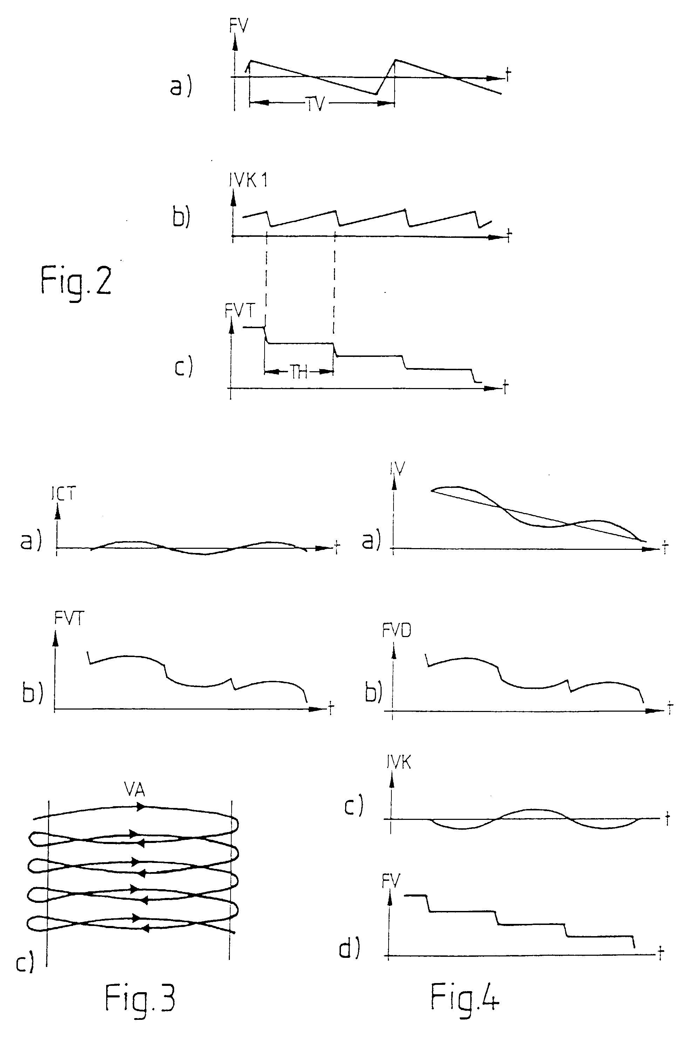

Der Vertikalablenkgenerator 11 erzeugt ein sägezahnförmiges Ansteuersignal, das über die Vertikalendstufe 12 die Vertikalablenkspulen 13 mit einer sägezahnförmige Spannung mit der Periodendauer TV eines Halbbildes ansteuert. Die Ablenkspulen 13 erzeugen somit zunächst in der Bildröhre 6 ein sägezahnförmiges Ablenkfeld FV gemäß Fig. 2a. Bei einer symmetrischen Ablenkung ist dieses Ablenkfeld jedoch nicht geeignet, da dann die abwechselnd von links nach rechts und von rechts nach links geschriebenen Zeilen auseinanderlaufen würden. Vielmehr muß das Ablenkfeld FV einen treppenförmigen Verlauf haben, wobei jeweils eine Treppe die Dauer einer Zeile TH hat. Um dieses zu erreichen, wird eine zeilenfrequente Korrekturspannung IVK1 gemäß Fig. 2b über die Addierstufe 17 und den breitbandigen Verstärker 15 einer zusätzlichen Vertikal-Hilfsablenkspule 14 zugeführt, die daraufhin in der Bildröhre 6 zusätzlich zu dem Ablenkfeld FV gemäß Fig. 2a ein weiteres Ablenkfeld mit dem Verlauf gemäß Fig. 2b erzeugt. Die Steigung der Kurven FV und IVK1 sind gleich, so daß sich jeweils während einer Zeilendauer TH ein waagerechter Verlauf für das resultierende Ablenkfeld FVT und insgesamt ein treppenförmiger Verlauf des Ablenkfeldes FVT ergibt. Die Überlagerung des Kurvenverlaufes FV gemäß Fig. 2a und des Kurvenverlaufes IVK1 gemäß Fig. 2b zur Erzielung des treppenförmigen Feldes FVT erfolgt also nicht durch Überlagerung der Ströme, sondern durch Addition der von den getrennten Vertikalablenkspulen 13, 14 in der Bildröhre 6 erzeugten Ablenkfelder. Während die Ablenkspule 13 z.B. eine Induktivität von 20 mH hat, hat die Hilfs-Ablenkspule 14 nur eine Induktivität von einigen µH. Dadurch ist es möglich, in der Hilfsablenkspule 14 einen Ablenkstrom mit hohen Frequenzanteilen mit dem Verlauf gemäß Fig. 2b zu erzeugen.

Fig. 3 zeigt einen in der Anordnung nach Fig. 1 auftretenden Fehler. Die Ablenkspulen 9, 13 sind an der Bildröhre 6 im allgemeinen in derselben axialen Lage übereinander angeordnet. Dadurch kommt es zu einem unvermeidbaren Übersprechen von der Horizontalablenkspule 9 auf die Vertikalablenkspule 13, das in Fig. 3a mit ICT dargestellt ist. Durch das Übersprechen dieses sinusförmigen Anteils aufgrund des sinusförmigen Horizontalablenkstromes ergibt sich ein vertikales Ablenkfeld FVD gemäß Fig. 3b. Durch dieses Übersprechen entsteht auf dem Bildschirm eine in der Geometrie stark gestörte Vertikalablenkung VA gemäß Fig 3c, bei der die Zeilen einen unerwünschten, stark gekrümmten Verlauf haben. Das Übersprechen kann im Bereich der Grundwelle des horizontalen sinusförmigen Ablenkstroms liegen, aber auch Kopplungen im Bereich von Oberwellen des Horizontalablenkstromes sind möglich, wobei das Übersprechen nicht in Phase zum Horizontalablenkstrom sein muß, wie dies vereinfacht in Fig. 3c dargestellt ist.

Anhand der Fig. 4 wird erläutert, wie in Fig. 1 durch eine Weiterbildung ein derartiges Übersprechen beseitigt wird. Die Korrektureingabe 21 steuert den Speicher 16. Aus dem Speicher 16 wird eine Korrekturspannung IVK2 ausgelesen, die in der Addierstufe 17 der Korrekturspannung IVK1 hinzugefügt wird. IVK2 ist in Gegenphase zu ICT gemäß Fig. 3a und kompensiert die sinusförmige Einkopplung von IH in IV gemäß Fig. 4a, die das gestörte Vertikalablenkfeld FVD gemäß Fig. 4b erzeugt. Durch diese Kompensation kann durch die Vertikalablenkspule 13 und die Hilfs-Ablenkspule 14 in der Bildröhre 6 das gewünschte treppenförmige Ablenkfeld FV gemäß Fig. 4d erzeugt werden. Die zweidimensionale Korrekturfunktion wird mit Stützstellen gespeichert (m in horizontaler Richtung, n in vertikaler Richtung). Die eigentliche Korrekturfunktion ergibt sich durch die zweidimensionale Interpolation dieser Stützwerte.

In horizontaler Richtung ist für die exakte Übereinstimmung von hin- und rücklaufendem Elektronenstrahl eine hohe Symmetrie des horizontalen Ablenkstromes erforderlich, da sonst durch Versatz von Bildpunkten in Horizontalrichtung Doppelkonturen auftreten können. Diese Symmetrie kann jedoch durch eine nicht hinreichend unterdrückten Oberwellenanteil, aber auch durch parasitäre Felder der Ablenkspule gestört sein. Für eine Feinkorrektur in Horizontalrichtung ist zusätzlich in Fig. 1 eine Horizontal-Hilfsablenkspule 18 vorgesehen, die mit einem Korrekturstrom IHKor gespeist wird. Das dafür notwendige horizontale Korrektursignal wird in dem horizontalen Korrekturspeicher 19 erzeugt und über den Verstärker 20 der Hilfsablenkspule 18 zugeführt. Zum Ausgleich parasitärer Nichtlinearitäten im Ablenkfeld wird diese horizontale Korrekturfunktion ebenfalls von k,l Stützstellen (k in horizontaler Richtung, l in vertikaler Richtung) gebildet. Die Korrektureingabe 21 kann manuell oder auch als ein geschlossener Kreis mit einem optischen Aufnahmesystem ausgestaltet sein.

Als Hilfsablenkspule 18 kann eine Ablenkspule geringer Induktivität von einigen µH verwendet werden, die ohnehin für eine Modulation der Horizontalablenkgeschwindigkeit zwecks Verbesserung der Bildschärfe vorgesehen ist. Ebenso kann als Vertikal-hilfsablenkspule 14 eine bereits vorhandene Ablenkspule kleiner Induktivität verwendet werden, die zur Modulation der Vertikalablenkgeschwindigkeit zwecks Erhöhung der vertikalen Bildschärfe vorgesehen ist. Die gesamte in Fig. 1 dargestellte Anordnung mit insgesamt vier Ablenkspulen kann dann eine Vielzahl von Aufgaben erfüllen. Das sind die Erzeugung eines sägezahnförmigen Ablenkfeldes FV gemäß Fig. 2a durch die Spule 13, die Umformung dieses sägezahnförmigen Ablenkfeldes in ein treppenförmiges Ablenkfeld FVT gemäß Fig. 2c durch die Hilfsablenkspule 14, die Erzeugung eines sinusförmigen Ablenkfeldes für eine symmetrischen Ablenkung in der Ablenkspule 9, die Kompensation des Übersprechens von der Horizontalablenkspule 9 in die Vertikalablenkspule 13 durch den Korrekturstrom IVKor in der Hilfs-ablenkspule 14, die Herstellung der Symmetrie des sinusförmigen Horizontablenkstromes IH durch den Korrekturstrom IHKor, die Modulation der horizontalen Ablenkgeschwindigkeit zwecks Erhöhung der horizontalen Bildschärfe durch die Hilfsablenkspule 18 und die Modulation der vertikalen Ablenkgeschwindigkeit zur Erhöhung der vertikalen Bildschärfe durch die Hilfsablenkspule 14.

Das Auslesen der Signale aus dem Speicher 2 durch die PLL-Schaltung 4 muß phasengenau zu dem Zeilenablenkstrom iH erfolgen, und zwar derart, daß die Bildpunkte des ursprünglichen Bildes auf der Bildröhre 6 wieder die vorgeschriebene räumliche Lage haben. Im Weg des Zeilenablenkstromes IH liegt daher der Kondensator 22, der eine Abstimmung der Horizontalablenkspule 9 auf die Frequenz des sinusförmigen Zeilenablenkstroms IH bewirkt. Die an dem Kondensator 22 abfallende, IH darstellende Spannung wird der Auswertschaltung 23 zugeführt. Diese liefert über die Leitung 24 an die PLL-Schaltung 4 ein Signal über die Dauer, die Phase und die Kurvenform des Zeilenablenkstromes IH. In Abhängigkeit davon erfolgt das Auslesen der zu den einzelnen Bildpunkten gehörenden Signale aus dem Speicher 4 in der Weise, daß das Bild auf dem Bildschirm der Bildröhre 6 mit der richtigen Geometrie geschrieben wird.

## Patentansprüche

1. Ablenkschaltung für einen Fernsehempfänger mit symmetrischer Ablenkung, bei der der Ablenkeinheit mit einer Vertikalablenkspule (13) und einer Horizontalablenkspule (9) ein Vertikalablenkstrom (IV), ein Horizontalablenkstrom (IH) und ein zeilenfrequenter Vertikal-Hilfsablenkstrom (IVK1) zugeführt werden, der zusammen mit dem Vertikalablenkstrom (IV) ein treppenförmiges Vertikalablenkfeld (VFT) bewirkt, wobei für den Vertikal-Hilfsablenkstrom (IVK1) eine von der Vertikalablenkspule (13) getrennte Vertikal-Hilfsablenkspule (14) mit einer gegenüber der Vertikalablenkspule (13) wesentlich geringeren Induktivität vorgesehen ist, **dadurch gekennzeichnet**, daß der Vertikal-Hilfsablenkspule (14) zusätzlich ein zeilenfrequenter Korrekturstrom (IVK2) zur Kompensation des Übersprechens von der Horizontalablenkspule (9) in die Vertikalablenkspule (13) zugeführt ist.

2. Schaltung nach Anspruch 1, **dadurch gekennzeichnet**, daß als Vertikal-Hilfsablenkspule (14) eine ohnehin vorhandene Hilfsablenkspule für eine Modulation der Vertikal-Ablenkgeschwindigkeit ausgenutzt ist.

3. Schaltung nach Anspruch 1, **dadurch gekennzeichnet,** daß zusätzlich eine Horizontal-Hilfsablenkspule (18) mit einer gegenüber der Horizontalablenkspule (9) wesentlich geringeren Induktivität vorgesehen ist.

4. Schaltung nach Anspruch 3, **dadurch gekennzeichnet**, daß der Horizontal-Hilfsablenkspule (18) ein horizontalfrequenter Korrekturstrom (IHKor) zur Erzielung der exakten Übereinstimmung von hinlaufendem und rücklaufendem Elektronenstrahl zugeführt ist.

5. Schaltung nach Anspruch 3, **dadurch gekennzeichnet**, daß als Horizontal-Hilfsablenkspule (18) eine ohnehin vorhandene Hilfsablenkspule für die Modulation der horizontalen Ablenkgeschwindung zwecks Erhöhung der horizontalen Bildschärfe ausgenutzt ist.

## Claims

1. Deflection circuit for a television receiver using symmetrical deflection in which there are applied to the deflection unit including a vertical deflection coil (13) and a horizontal deflection coil (9), a vertical deflection current (IV), a horizontal deflection current (IH) and a line frequency vertical auxiliary deflection current (IVK1) which produces a step shaped vertical deflection field (VFT) in conjunction with the vertical deflection current (IV) wherin a vertical auxiliary deflection coil (14) separated from the vertical deflection coil (13) and having a substantially lower inductance compared with the vertical deflection coil (13) is provided for the vertical auxiliary deflection current (IVK1),
characterised in that additionally a line frequency correction current (IVK2) is applied to the vertical auxiliary deflection coil (14) for compensating the crosstalk from the horizontal deflection coil (9) into the vertical deflection coil (13).

2. Circuit in accordance with claim 1, characterised in that an auxiliary deflection coil which is in any case present for a modulation of the vertical deflection speed is utilised as the vertical auxiliary deflection coil (14).

3. Circuit in accordance with claim 1, characterised in that a horizontal auxiliary deflection coil (18) having a substantially lower inductance relative to the horizontal deflection coil (9) is additionally provided.

4. Circuit in accordance with claim 3, characterised in that a horizontal frequency correction current (IHKor) is supplied to the horizontal auxiliary deflection coil (18) for achieving the exact balancing of the forward and backward scanning electron beams.

5. Circuit in accordance with claim 3, characterised in that an auxiliary deflection coil which is in any case present for the modulation of the horizontal deflection speed for the purpose of increasing the horizontal picture definition is utilised as the horizontal auxiliary deflection coil (18).

## Revendications

1. Circuit de déflexion pour récepteur de télévision à déflexion symétrique dans lequel l'unité de déflexion composée d'une bobine de déflexion verticale (13) et d'une bobine de déflexion horizontale (9) reçoit un courant de déflexion verticale (IV), un courant de déflexion horizontale (IH) et un courant de déflexion verticale auxiliaire à fréquence de ligne (IVK1) qui, associé au courant de déflexion verticale (IV), génère un champ de déflexion verticale en escalier (VFT), dans lequel est prévu pour le courant de déflexion verticale auxiliaire (IVK1) une bobine de déflexion verticale auxiliaire (14) séparée de la bobine de déflexion verticale (13) et d'une inductivité nettement inférieure à celle de la bobine de déflexion verticale (13), **caractérisé en ce que** la bobine de déflexion verticale auxiliaire (14) reçoit en plus un courant de correction à fréquence de ligne (IVK2) destiné à compenser la diaphonie de la bobine de déflexion horizontale (9) dans la bobine de déflexion verticale (13).

2. Circuit conforme à la revendication 1, **caractérisé en ce qu'**une bobine de déflexion auxiliaire existante possédant une plus faible inductivité est utilisée comme bobine de déflexion verticale auxiliaire (14) pour la modulation de la vitesse de déflexion verticale.

3. Circuit conforme à la revendication 1, **caractérisé en ce qu'**il est prévu en complément, une bobine de déflexion horizontale auxiliaire (18) d'une inductivité nettement inférieure à celle de la bobine de déflexion horizontale (9).

4. Circuit conforme à la revendication 3, **caractérisé en ce que** la bobine de déflexion horizontale auxiliaire (18) reçoit un courant de correction (IHKor) pour l'obtention d'une synchronisation parfaite du faisceau d'électrons aller et retour.

5. Circuit conforme à la revendication 3, **caractérisé en ce qu'**une bobine de déflexion auxiliaire existante est utilisée comme bobine de déflexion horizontale auxiliaire (18) pour la modulation de la vitesse de déflexion horizontale dans le but d'améliorer la netteté horizontale de l'image.
